Europäisches Patentamt

European Patent Office

Office européen des brevets

(19)

(11) **EP 1 605 730 B1**

(12) **EUROPEAN PATENT SPECIFICATION**

(45) Date of publication and mention
of the grant of the patent:
**23.08.2006 Bulletin 2006/34**

(51) Int Cl.:
*H05B 6/68* *(2006.01)*     *G05D 23/19* *(2006.01)*
*F24C 7/08* *(2006.01)*

(21) Application number: **04102578.4**

(22) Date of filing: **08.06.2004**

(54) **A method to automate cooking processes**

Verfahren zur Automatisierung von Kochvorgängen

Procédé pour automatiser des processus de cuisson

(84) Designated Contracting States:
**AT BE BG CH CY CZ DE DK EE ES FI FR GB GR
HU IE IT LI LU MC NL PL PT RO SE SI SK TR**

(43) Date of publication of application:
**14.12.2005 Bulletin 2005/50**

(73) Proprietor: **Electrolux Home Products
Corporation N.V.
1930 Zaventem (BE)**

(72) Inventor: **MIGLIOLO, Francesco
33170, Pordenone (IT)**

(74) Representative: **Giugni, Valter et al
PROPRIA S.r.l.,
Via Mazzini 13
33170 Pordenone (IT)**

(56) References cited:
**EP-A- 0 933 596          EP-A- 1 091 208
DE-A- 19 517 104          US-A- 4 503 502
US-A- 4 914 277**

• **PATENT ABSTRACTS OF JAPAN vol. 2003, no.
12, 5 December 2003 (2003-12-05) & JP 2004
028625 A (HITACHI LTD), 29 January 2004
(2004-01-29)**

**Description**

The present invention refers to a new method to automate cooking processes by means of a learning procedure coding recipes into stochastic models.

It is known that cooking chemical reactions are highly non linear chaotic processes. This means that stabilising and controlling cooking processes are very hard tasks, so as said processes were not automated for long time. Adaptive human control has been an unavoidable solution. As a consequence, cooking results largely depend on the cook's skill. This situation is not at all acceptable, particularly in a catering system.

Potential methods of cooking control include techniques such as predictive and adaptive control.

Predictive control methods are based on the model availability of the process to be controlled. These methods may be repeatedly applied only in case the food to be cooked has all its quality and quantity parameters exactly the same of the model.

An adaptive cooking system is able to adjust the current cooking situation. It gains information about the current cooking state and uses it. However, such a system is memoryless in the sense that it is not able to store the information for later use. All new information replaces the old one. Only the current information is available.

Reliable close loop systems are now feasible by using computerised means which act on devices regulating heat power levels in order to accomplish a cooking procedure to produce the best result in connection with the specific food to be prepared.

US 4,914,277 discloses an automatic electric oven with a memory enabling one to modify the cooking parameters to execute the recipes resulting from cookings tested and entered into the memory. The cooking parameters can be modified or adjusted at any time taking into account the skill of the user.

Thus, the method and the device allow the user to "retain" his know-how and to re-execute it exactly when he must prepare the same meal. This means that only variables set by the user or measured during the cooking-process are memorised, but no mathematical model is taken as reference to the cooking dynamics.

EP 1 091 208 discloses a method for thermally analyzing a material, as in a conventional calorimetry, in order to derive structural and compositional information about the material, in particular heat capacity, heat of reaction phase transitions, onset temperatures etc. According this patent, the heating power or heating temperature of the heat source are stochastically modified to excite thermally a material sample. The stochastic excitation allows to directly measure the relaxation function, which describes the time response of the material to a pulse-shaped disturbance. It teaches to use a first control signal set in a programmer to drive the heat source and a second control signal which is stochastically generated by a microprocessor.

Therefore, the stochastic element is a temperature perturbation produced by an additional signal.

Therefore, the main object of the present invention is to provide a new method to automate cooking processes based on learning the cook's experience and on its coding in stochastic models.

Another object of the invention is to accomplish the new cooking method by using well tested low-cost devices without the need to implement different apparatuses.

Another object of the invention is to implement an effective and flexible cooking decisional process using stochastic simulation techniques, i.e. based on realizations of casual variables representing a process developing according to probabilistic laws. A method for simulating a mechanistic kinetic process, such as a chemical process including one or more chemical reactions, over a predetermined time period, subject to a programmed temperature variation, is known by US Patent no. 5,745,385. Said patent, however, discloses a method which provides a first step wherein a time value selection technique is a stochastic technique, whereas successive deterministic time steps are made. In its context, "deterministic" means externally imposed. Alternatively, the deterministic time steps can be fixed length time steps.

Then, another object of the present invention is to use the most simple and direct variable of the cooking process, i.e. the food temperature, to automate the whole learning and controlling processes.

These and other objects of the invention are obtained by the method and means which are defined in the appended claims.

Feature and advantages of the invention will be better appreciated from the following description given solely by way of non-limiting example and with reference to the accompanying drawings, wherein:

Figure 1 shows a schematic view of a cooking system according to the invention;
Figure 2 shows the relationship between the transition probability from a power level to another and the food temperature;
Figure 3 shows a flow chart representing the learning process according to the invention; and
Figure 4 shows a flow chart representing the autonomous control process according to the invention.

A cooking process has an inherent dynamic complexity due to a synergy of a lot of physical variables, e.g. quality and quantity of the food, features of the heating device and of control tools. An effective complexity reduction is not allowable. By definition a complex system is not informatively compressible; therefore, its control asks for an adequate approach.

The idea behind the present invention is to try to model the hidden human decisional process by one stochastic simulation.

Controller states are defined over a discrete set constituted by cooking power levels. A human decision about a power switching is related to the observable food temperature level. It is possible to estimate transition probabilities by means of cooking experiments reaching a homogeneous cooking target.

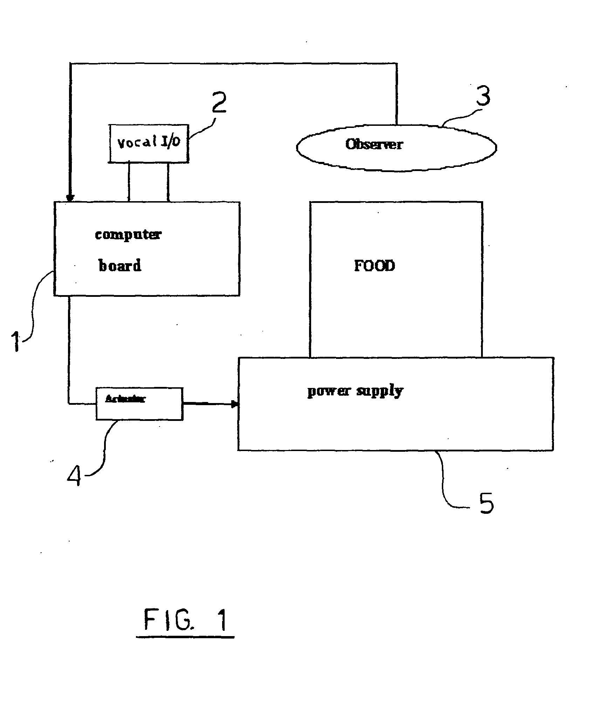

A human operator can train the system, e.g. by simple speech commands. Figure 1 shows a schematic representation of a cooking device to implement the present invention. The cooking system is organised in a close loop control system, comprising a microcomputer board 1 which is activated through input means 2, which may be of any known kind, e.g. vocal device. The microcomputer board 1 is also connected to sensor means 3 for detecting the cooking conditions and to actuating means 4 for controlling a heating device 5. The sensor means 3 may be a temperature probe to be inserted into the food, or a temperature infrared sensor, or other known devices.

All components of the system are of traditional type and well known, so as there is no need to discuss them in details.

The new automate cooking method according with the invention is based on the principle to train the system by supplying it with experimental data for each specific food cooking. A periodical survey of the food temperature during the cooking process allows gathering relevant data which are used to implement the learning development of the system.

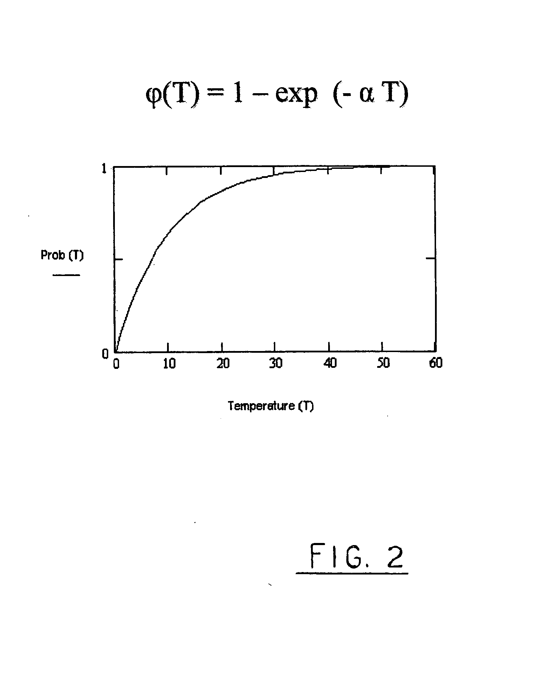

Specifically, heating power transitions are gathered and transition probabilities from a power level to another are evaluated by a parameter estimation procedure. Figure 2 shows the curve of the transition probability depending on the food temperature according to the following formula:

$$\varphi(T) = 1 - \exp(-\alpha\, T),$$

wherein: T = food temperature, and $\alpha$ = parameter related to a heating power level transition.

The value of the parameter $\alpha$ is estimated by solving the following equation at temperature where a power transition is realised by the cook:

$$Threshold = \varphi(T_T),$$

that is:

$$Threshold = 1 - \exp(-\alpha\, T_T),$$

where: $T_T$ = transition temperature.

*Threshold* should be chosen between 0 and 1. As far as it has been experienced, an adequate $\alpha$-parameter value is 0,66.

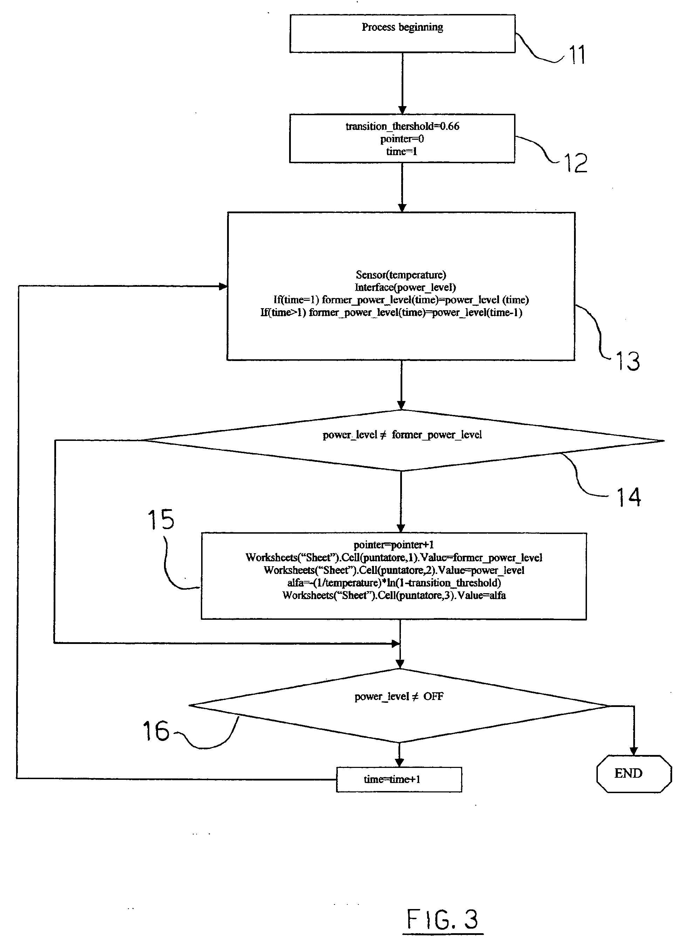

The learning process is shown by the flow chart of Figure 3.

The process begins (step 11) by activation of the cooking device and goes on (step 12) with a first record of data, at time 1. Said first data record represents the first heating transition, i.e. a first operation made by the user on the control means of the cooking device 5.

Then, a temperature sensor associated with the food starts periodically to survey the food temperature (step 13) and to record each heating power level transition (step 14).

All data are sent to the microcomputer 1 (Figure 1) and each data record is compared with the previous one (step 15). If the present data record is different from the former one, the process continues as long as the heating power level is maintained (step 16) and ends when the heating is stopped, i.e. power level equal OFF.

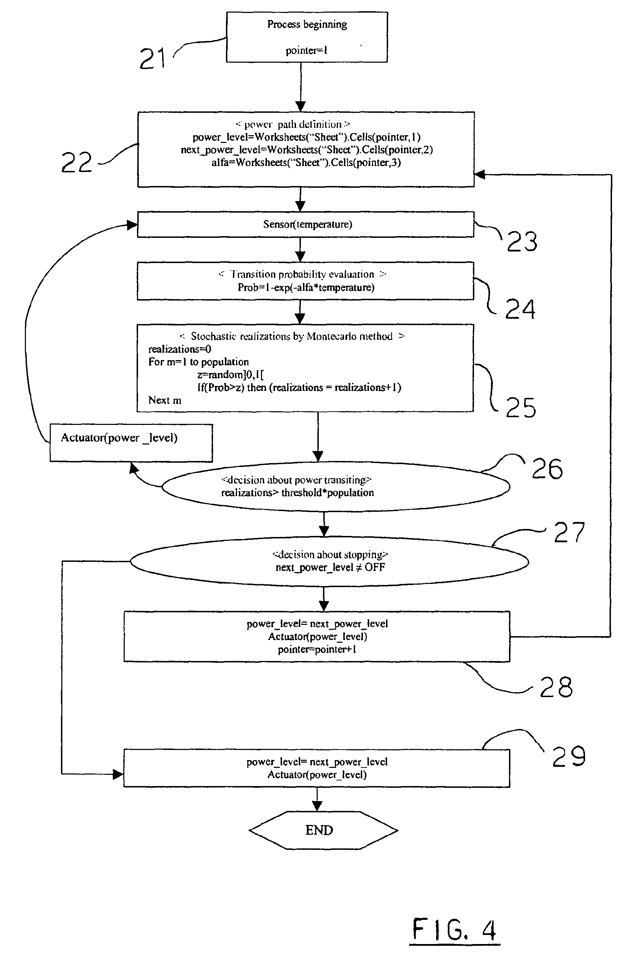

The automatic cooking process is shown by the flow chart of Figure 4.

The process begins, (step 21) by selecting a recipe and activating the heating device. Then, the first step of cooking starts (step 22) by gathering a first heating power level.

A temperature sensor, which is introduced into the food, periodically surveys the food temperature (step 23) and sends the relevant data to a microprocessor unit which evaluate a transition probability (step 24) according to the already reported formula:

$$\varphi(T) = 1 - \exp(-\alpha\,T).$$

Figure 2 shows the curve of the transition probability depending on the gathered food temperature.

Microprocessor unit makes a simulation about transition activation by a naïve Montecarlo approach. It supposes a population of stochastic cooking systems and by a pseudocasual random number generator tries to realise transitions (step 25).

It has been found experimentally that a stochastic cooking systems population of 10000 elements is a parameter sufficient to implement the system.

Decision is taken at step 26. In case the next heating power level is OFF (step 27) the process runs to the end (step 29). In case the next heating power level is different from OFF, the process continues (step 28) by activating a further cooking step 22.

In conclusion, the new method allows fully to automate cooking processes by storing cook's experience and applying a stochastic process, in order to repeat automatically said processes adjusted on the basis of different parameters (in particular, the quantity) of the food to be cooked.

**Claims**

1. A method to automate cooking processes based on the learning of cook's selected recipes, to be implemented in a cooking device controlled by computer, through a stochastic process by using a periodical survey of the food temperature, and gathered heating power transitions
**characterised by** the following steps:
realization of cook's selected recipes

- Identification relationships between power levels transitions resulting from human decisions and the observable food temperatures.
- Estimation of probability transitions parameters by information carried by the said relationships.
- Implementation of the recipe into a system electronic library where cook's recipes are coded in stochastic models by means of probability transitions parameters.
- Autonomous control of the cooking process by stochastic simulation of cook's decisional processes using the probability parameters.

2. A method according to claim 1, **characterised in that** the heating power transitions are produced following a gathered data of the food temperature.

3. A method according to claim 2, **characterised in that** the transition probabilities are evaluated on the base of the following formula:

$$\varphi(T) = 1 - \exp(-\alpha\,T),$$

wherein: T = food temperature, and $\alpha$ = parameter related to a heating power level transition.

4. A method according to claim 3, **characterised in that** the $\alpha$-parameter is evaluated by the following equation:

$$\mathit{Threshold} = \varphi(T_T),$$

that is:

$$\mathit{Threshold} = 1 - \exp(-\alpha\,T_T),$$

where: $T_T$ = transition temperature.

5. A method according to claim 4, **characterised in that** the transition probability threshold is estimated as 0.66.

6. A cooking device to implement a method to automate cooking processes , comprising a microcomputer unit (1) which is activated through input means (2) to store data concerning cooking processes, the microcomputer unit (1) being connected to sensor means (3) for detecting the cooking conditions and to actuating means (4) for controlling the cooking device (5), **characterised in that** the microcomputer unit (1) is able to control the cooking device (5) by periodical stochastic simulations of cook's decisional processes according to a method as defined in one of the preceding claims 1 to 5.

7. A cooking device according with claim 6, **characterised in that** the microcomputer unit (1) is able to activate the actuating means (4) on the basis of the transition probabilities evaluated with following formula:

$$\varphi(T) = 1 - \exp(-\alpha\, T),$$

wherein: T = food temperature, and $\alpha$ = parameter related to a heating power level transition.

**Patentansprüche**

1. Verfahren zur Automatisierung von Kochvorgängen, welches auf dem Erlernen von vom Koch ausgewählten Rezepten beruht, die in einer computergesteuerten Kochvorrichtung über einen stochastischen Vorgang durch die Nutzung einer periodischen Überwachung der Speisentemperatur und der erfassten Heizleistungsumschaltungen verwirklicht werden sollen, **gekennzeichnet durch** die folgenden Schritte:

- Erkennen der Beziehungen zwischen den Umschaltungen der Leistungsstufen, welche sich aus den menschlichen Entscheidungen ergeben, und den beobachtbaren Speisentemperaturen;
- Abschätzung der Parameter für die Wahrscheinlichkeit der Umschaltungen **durch** Informationen, die in den genannten Beziehungen enthalten sind;
- Implementierung des Rezeptes in ein elektronisches Bibliotheksystem, wo die Rezepte des Koches mittels der Parameter für die Wahrscheinlichkeit der Umschaltungen in stochastische Modelle kodiert werden;
- Autonome Steuerung des Kochvorganges **durch** stochastische Simulation der Entscheidungsprozesse des Koches unter Verwendung der Wahrscheinlichkeitsparameter.

2. Verfahren gemäß Anspruch 1, **dadurch gekennzeichnet, dass** die Umschaltungen der Heizleistungsstufen erfolgen, nachdem Daten über die Speisentemperatur gesammelt worden sind.

3. Verfahren gemäß Anspruch 2, **dadurch gekennzeichnet, dass** die Umschaltwahrscheinlichkeiten auf der Grundlage der nachfolgenden Formel festgesetzt werden:

$$\varphi(T) = 1 - \exp(-\alpha \cdot T),$$

worin T = Speisentemperatur und $\alpha$ = Parameter, welcher mit der Umschaltung von einer Heizleistungsstufe in eine andere im Zusammenhang steht.

4. Verfahren gemäß Anspruch 3, **dadurch gekennzeichnet, dass** der Parameter $\alpha$ mittels der folgenden Gleichung abgeschätzt wird:

$$Schwellwert = \varphi(T_T),$$

d.h.

$$\text{Schwellwert} = 1 - \exp(-\alpha \cdot T_T),$$

worin $T_T$ = Umschalttemperatur.

**5.** Verfahren gemäß Anspruch 4, **dadurch gekennzeichnet, dass** der Schwellwert der Umschaltwahrscheinlichkeit zu 0,66 abgeschätzt wird.

**6.** Kochvorrichtung zur Verwirklichung eines Verfahrens zur Automatisierung von Kochvorgängen, welche eine Mikrocomputereinheit (1) umfasst, die durch Eingabemittel (2) zur Speicherung von Daten aktiviert wird, welche die Kochvorgänge betreffen, wobei diese Mikrocomputereinheit (1) mit einem Sensormittel (3) zur Erfassung der Kochbedingungen und mit einem Betätigungsmittel (4) zur Steuerung der Kochvorrichtung (5) verbunden ist, **dadurch gekennzeichnet, dass** die Mikrocomputereinheit (1) in der Lage ist, die Kochvorrichtung (5) durch periodische stochastische Simulationen der Entscheidungsvorgänge des Koches gemäß einem Verfahren zu steuern, wie es in einem der vorhergehenden Ansprüche 1 bis 5 festgelegt ist.

**7.** Kochvorrichtung gemäß Anspruch 6, **dadurch gekennzeichnet, dass** die Mikrocomputereinheit (1) in der Lage ist, die Betätigungsmittel (4) auf der Grundlage der Umschaltwahrscheinlichkeiten zu aktivieren, welche nach der folgenden Formel festgesetzt werden:

$$\varphi(T) = 1 - \exp(-\alpha \cdot T),$$

worin T = Speisentemperatur und $\alpha$ = Parameter, welcher mit dem Umschalten von einer Heizleistungsstufe in eine andere im Zusammenhang steht.

## Revendications

**1.** Procédé pour automatiser des processus de cuisson, basé sur l'apprentissage de recettes de cuisson choisies devant être appliquées dans un dispositif commandé par ordinateur, par un processus stochastique en utilisant un relevé périodique de la température des aliments et des transitions de puissance de chauffe recueillies, **caractérisé par** les étapes suivantes :

- réalisation de recettes de cuisine choisies,
- identification de relations entre des transitions de niveaux de puissance résultant de décisions humaines et les températures observables des aliments,
- estimation des paramètres de transitions de probabilités par des informations portées par lesdites relations,
- implémentation de la recette dans une bibliothèque électronique système où les recettes de cuisine sont codées dans des modèles stochastiques au moyen de paramètres de transitions de probabilités,
- contrôle autonome du processus de cuisson par simulation stochastique de processus décisionnels du cuisinier à l'aide des paramètres de probabilité.

**2.** Procédé selon la revendication 1, **caractérisé en ce que** les transitions de puissance de chauffe sont produites d'après les données recueillies sur la température des aliments.

**3.** Procédé selon la revendication 2, **caractérisé en ce que** les probabilités de transition sont évaluées par la formule suivante :

$$\varphi(T) = 1 - \exp(-\alpha T)$$

dans laquelle : T = température des aliments, et $\alpha$ = paramètre lié à une transition de niveau de puissance de chauffe.

**4.** Procédé selon la revendication 3, **caractérisé en ce que** le paramètre $\alpha$ est évalué par l'équation suivante :

$$\text{Seuil} = \varphi(T_\tau)$$

c'est-à-dire :

$$\text{Seuil} = 1 - \exp(-\alpha T_\tau)$$

où $T_T$ = température de transition.

5.  Procédé selon la revendication 4, **caractérisé en ce que** le seuil de probabilité de transition est estimé à 0,66.

6.  Dispositif de cuisson pour implémenter un procédé d'automatisation de processus de cuisson comprenant une unité à micro-ordinateur (1) qui est activée par des moyens d'entrée (2) pour enregistrer des données concernant des processus de cuisson, l'unité à micro-ordinateur (1) étant reliée à des moyens capteurs (3) pour détecter les conditions de cuisson et à des moyens d'actionnement (4) pour contrôler le dispositif de cuisson (5), **caractérisé en ce que** l'unité à micro-ordinateur (1) est capable de commander le dispositif de cuisson (5) par des simulations stochastiques périodiques de processus décisionnels du cuisinier suivant un procédé défini dans l'une des revendications 1 à 5 ci-dessus.

7.  Dispositif de cuisson selon la revendication 6, **caractérisé en ce que** l'unité à micro-ordinateur (1) est capable d'activer les moyens d'actionnement (4) à partir des probabilités de transition évaluées par la formule suivante :

$$\varphi(T) = 1 - \exp(-\alpha T)$$

dans laquelle : T = température des aliments, et $\alpha$ = paramètre lié à une transition de niveau de puissance de chauffe.

FIG. 1

$$\varphi(T) = 1 - \exp \, (- \alpha \, T)$$

FIG. 2

```
                    Process beginning                    ╮
                                                         │──── 11

                    transition_thershold=0.66            ╮
                    pointer=0                            │──── 12
                    time=1                               ╯

                    Sensor(temperature)
                    Interface(power_level)
      If(time=1) former_power_level(time)=power_level (time)
      If(time>1) former_power_level(time)=power_level(time-1)
                                                         ╮
                                                         │──── 13

                  power_level ≠ former_power_level       ╮
                                                         │──── 14

      15
                    pointer=pointer+1
      Worksheets("Sheet").Cell(puntatore,1).Value=former_power_level
      Worksheets("Sheet").Cell(puntatore,2).Value=power_level
      alfa=-(1/temperature)*ln(1-transition_threshold)
      Worksheets("Sheet").Cell(puntatore,3).Value=alfa


                    power_level ≠ OFF               END
      16

                    time=time+1
```

$$alfa = -(1/temperature)*ln(1-transition\_threshold)$$

## FIG. 3

21

Process beginning

pointer=1

22

< power path definition >
power_level=Worksheets("Sheet").Cells(pointer,1)
next_power_level=Worksheets("Sheet").Cells(pointer,2)
alfa=Worksheets("Sheet").Cells(pointer,3)

Sensor(temperature)

23

< Transition probability evaluation >
Prob=1-exp(-alfa*temperature)

24

< Stochastic realizations by Montecarlo method >
realizations=0
For m=1 to population
        z=random]0,1[
        If(Prob>z) then (realizations = realizations+1)
Next m

25

Actuator(power _level)

<decision about power transiting>
realizations> threshold*population

26

<decision about stopping>
next_power_level ≠ OFF

27

power_level= next_power_level
Actuator(power_level)
pointer=pointer+1

28

power_level= next_power_level
Actuator(power_level)

29

END

FIG. 4